# FASCICULE DE BREVET EUROPEEN

(11) **EP 0 735 816 B1**
(45) Date de publication et mention de la délivrance du brevet: **18.10.2000**
(21) Numéro de dépôt: 95904581.6
(22) Date de dépôt: 21.12.1994
(51) Int. Cl.: A01N 25/12

(54) **PROCEDE DE PREPARATION DE GRANULES RENFERMANT UN OU PLUSIEURS PRINCIPES ACTIFS**
VERFAHREN ZUR HERSTELLUNG VON WIRKSTOFFHALTIGEN GRANULATEN
METHOD FOR PREPARING GRANULES CONTAINING ONE OR MORE ACTIVE PRINCIPLES

(30) Priorité: 22.12.1993 FR 9315413
(43) Date de publication de la demande: 09.10.1996
(73) Titulaire: Aventis CropScience GmbH, 65929 Frankfurt am Main (DE)
(72) Inventeur: BOURGOGNE, Michel, F-13010 Marseille (FR); MEINARD, Colette, F-13012 Marseille (FR)
(86) Numéro de dépôt international: FR9401506
(87) Numéro de publication internationale: WO9517089

(56) Documents cités:
- EP-A- 0 127 773
- EP-A- 0 213 328
- WO-A-90/08467
- WO-A-93/14631
- WO-A-94/09627
- GB-A- 2 210 884

## Description

La présente invention concerne un nouveau procédé de préparation d'émulsions ou de suspo-émulsions, sèches ou extrudées sous forme de granulés et les granulés ainsi obtenus.

La présentation de la matière active sous forme d'émulsion permet l'obtention de granulés doués d'une activité biologique supérieure à celle d'un granulé dispersible dans l'eau obtenu par séchage d'une suspension concentrée d'un principe actif.

Le document EP-A-127773 divulgue des compositions de pesticides, particulièrement des pyréthrinoïdes synthétiques tels que la deltaméthrine, sous forme de granulés. Le solvant utilisé dans le procédé de preparation des granulés est le chlorure de méthylène, et constitue 16 - 28% de la quantité totale des ingrédients utilisés (m/m).

Le document WO-A-9008467 divulgue des compositions de pyréthrinoïdes en combinaison avec des solvants aromatiques, de préférence inclus dans des granulés.

Le document EP-A-213328 divulgue des procédés pour la formation de granulés, caractérisés en ce qu'on dissout les substances actives dans un solvant tel que les solvants aromatiques, les applique aux charges inertes tel que les bentonites etc., eventuellement avec des tensioactifs, des stabilisants etc., et les forme en granulés, eventuellement avec de l'eau.

Le document WO-A-9314631 (D4) divulgue des granulés utilisables dans l'agriculture, qui contiennent des substances actives tel que les pyréthrinoides, si nécessaire dissolues dans un solvant ou une huile. Celles-ci sont appliquées sur une charge inerte sous forme de granulés.

L'invention a pour objet un procédé de préparation de granulés renfermant un ou plusieurs principe actif caractérisé en ce que l'on dissout le ou les dits principes actifs dans un solvant, aromatique ou une pyrrolidone, la quantité de solvant utilisée étant comprise entre 20 et 40 % de la quantité totale des ingrédients utilisés (m/m), obtient une solution que l'on absorbe sur un support (ou une charge) pouvant contenir un autre principe actif, obtient un produit que l'on additionne ou pas d'eau, sèche et met sous forme de granulés.

Le support ou charge peut être choisi dans le groupe des produits suivants : les argiles, les bentonites, les lactoses, les amidons, les silices, les silicates, les sulfates, et les chlorures de métaux alcalins et alcalino-terreux.

Dans un mode de réalisation préférée, la quantité de support utilisée est inférieure à 60% (m/m) de la quantité totale des ingrédients utilisés.

Comme solvant on peut citer les hydrocarbures aromatiques, comme le 1-méthylnaphtalène, le tétrahydronaphtalène, le décahydronaphtalène, le 2-méthylnaphtalène ou le diméthylnaphtalène, les alkylbenzènes, le xylène (dont le Solvesso 200®), les mélanges d'isomères du dibenzyltoluène comme le Marlotherm S® ou les mélanges d'isomères du benzyltoluène comme le Marlotherm L®, les esters comme les benzoates d'alkyle (d'éthyle, de propyle, de n-butyle par exemple), les phtalates de mono et dialkyle (d'éthyle, de propyle ou de n-butyle, par exemple), les pyrrolidones comme la N-méthylpyrrolidone, la N-octylpyrrolidone (AG SOL EX 8®), la N-dodécylpyrrolidone (AG SOL EX 12®), la N-cyclohexylpyrrolidone ou encore des mélanges de ces solvants, comme la Surfadone LP 100®. On peut citer encore le dibenzyléther, le benzoate de N-butyle.

Comme solvant préféré, on peut citer les solvants aromatiques comme le Solvesso 200®, ou les pyrrolidones comme la Surfadone LP 100®.

Dans un mode de réalisation préférée, la quantité de solvant utilisée est comprise entre 20 et 40 % (m/m) de la quantité totale des ingrédients utilisés.

Le principe actif et un pyréthrinoide.

Le pyréthrinoide peut être seul ou associé à d'autres principes actifs comme le pyrimicarb ou les dérivés de l'acide β-méthoxy acrylique ou les lipidamides.

Parmi les pyréthrinoïdes utilisables pour la préparation des granulés de l'invention, on peut citer la deltaméthrine, la cyperméthrine, l'alphaméthrine, la tralométhrine, la cyalothrine, le fenvalérate, la cyfluthrine, le flucythrénate, le fluvalinate, la fenpropathrine, la téfluthrine, la bifenthrine, l'acrinathrine, l'esfenvalérate, la bétacyfluthrine, la taufluvalinate ou la lambdacyhalothrine.

Comme pyréthrinoïde préféré, on peut citer la deltaméthrine.

Dans un mode de réalisation préférée, la quantité de principe actif utilisée est inférieure à 20% de la quantité totale des ingrédients utilisés.

L'invention a notamment pour objet un procédé de préparation caractérisé en ce que l'on ajoute au solvant un ou plusieurs des ingrédients suivants : émulsifiants et stabilisants.

L'invention a également pour objet un procédé caractérisé en ce que l'on ajoute on outre un ou plusieurs des éléments suivants : dispersants, mouillants, liants, colorants, anti-mousses et adjuvants facilitant l'extrusion ou lubrifiants.

Comme émulsifiants, on peut citer des émulsifiants anioniques comme le dodécylbenzènesulfonate de calcium ou les esters phosphoriques ou des émulsifiants non ioniques comme des copolymères d'oxyde d'éthylène et d'oxyde de propylène, l'huile de ricin éthoxylée ou des alcools gras éthoxylés.

Comme stabilisants, on peut citer des anti-oxydants comme le butylhydroxytoluène ou des acides comme l'acide citrique ou l'acide acétique.

L'agent dispersant peut être un agent tensio-actif ionique ou non ionique ou un mélange de tels agents tensio-actifs.

Comme composés utilisables en tant qu'agent dispersant, on peut citer par exemple, les polymères de type arylsulfonate, notamment les polynaphtalènes sulfonates alcalins obtenus par condensation de dérivés (alkyl) aryl sulfonates avec du formaldéhyde, les lignosulfonates (par exemple : le lignosulfonate de sodium et le lignosulfonate de calcium), les polyphényl sulfonates, les sels d'acides polyacryliques, les sels d'acides lignosulfoniques (par exemple : le sel de sodium d'acides lignosulfoniques polymérisés de type Kraft), les sels d'acides phénols sulfoniques ou naphtalène sulfoniques, les esters phosphoriques d'alcools ou de phénols polyéthoxylés, les esters d'acides gras et de polyols, les dérivés à fonction sulfates, sulfonates et phosphates des composés précédents.

L'agent mouillant peut être un agent tensioactif ionique ou non ionique ou un mélange de tels agents tensio-actifs.

Comme composés utilisables on tant qu'agent mouillant, on peut citer par exemple, les sels de type alkyl sulfate (par exemple : le lauryl sulfate de sodium (SIPON LCS 98®), les sels de type alkyl éther sulfate (par exemple : le lauryl éther sulfate de sodium), les sels de type alkylaryl sulfonate, notamment les alkylnaphtalène sulfonate alcalins, les sels d'acides polycarboxyliques, les polycondensats d'oxyde d'éthylène sur des alcools gras ou sur des acides gras ou sur des amines grasses, les phénols substitués, notamment les alkylphénols ou les arylphénols, les sels d'esters d'acides sulfosucciniques, les sels d'α-oléfines sulfonates, des dérivés de la taurine, notamment les alkyltaurates (par exemple : le méthyltaurate d'oléyle).

Comme agent favorisant l'extrusion ou lubrifiant, on peut citer le stéarate de magnésium ou le talc.

Comme agent liant, on peut citer les sucres, les polyvinyl et polyalkyl pyrrolidones, la carboxyméthylcellulose et la gomme Xanthane.

Comme anti-mousses, on peut utiliser les silicones.

L'invention a tout particulièrement pour objet un procédé, caractérisé on ce que l'on utilise :
moins de 50 % de principe actif m/m
20 à 40 % de solvant m/m
0 à 5 % d'émulsifiant m/m
0 à 5 % de stabilisant m/m
0 à 15 % de dispersant m/m
0 à 10 % de mouillant m/m
0 à 5 % de liant m/m
0 à 1 % de lubrifiant m/m.

Les granulés ainsi obtenus sont en eux-mêmes un objet de la présente invention.

Les granulés obtenus selon l'invention sont faciles à préparer, faciles à utiliser et présentent une bonne stabilité ainsi qu'une bonne activité biologique.

Les granulés obtenus selon l'invention peuvent être utilisés dans le domaine :
- agricole pour le traitement des cultures,
- des animaux,
- de l'environnement.

On peut obtenir très facilement des compositions pesticides destinées au traitement des cultures, en dispersant les granulés dans l'eau.

On peut répandre par exemple de 50 à 1000 g par hectare de compositions ainsi préparées, c'est-à-dire une dose par hectare comprise entre 5 et 100 g de pyréthrinoïde par exemple.

Les granulés de l'invention ont de préférence une granulométrie comprise entre 1 et 10 mm par exemple entre 2 et 6 mm.

Les exemples suivants illustrent l'invention.

### A - Préparation des granulés de l'invention

On dissout la matière active dans un solvant comprenant éventuellement d'autres éléments (émulsifiant, stabilisant).

On absorbe la solution obtenue sur un support (appelé aussi charge) contenant éventuellement d'autres éléments (dispersant, mouillant, liant). On humidifie en ajoutant de l'eau pour obtenir une pâte que l'on force à travers une filière. On obtient ainsi des extrudats que l'on sèche et découpe à la taille souhaitée.

### Mode opératoire :

1 - Dissolution sous agitation magnétique de la matière active dans le solvant avec éventuellement des émulsifiants et stabilisants.
2 - Mélange des ingrédients solides (charges), des dispersants, des mouillants, des liants et éventuellement d'autres matières actives, dans un homogénéiseur pour poudres.
3 - Pulvérisation de la solution organique de matière active sur la charge solide (on peut aussi le faire sur la silice puis mélange avec d'autres ingrédients).
4 - Eventuellement broyage ou démottage du produit obtenu.
5 - Humidification de la poudre obtenue avec 0 à 50 g d'eau pour 100 g de poudre, de préférence 10 à 20 g.
6 - Extrusion sur filière avec trous de 0,5 A 3 mm (de préférence 1 mm).
7 - Séchage des extrudats obtenus sur lit d'air fluidisé à des températures comprises entre 20° et 150°C (de préférence 50° à 60°C). On peut sécher à l'étuve, à température ambiante, ou au four à micro-onde.
8 - Découpe à la dimension voulue.

On a préparé des granulés selon le mode opératoire décrit ci-dessus en utilisant les éléments suivants :

### EXEMPLE 1 :

| INGREDIENTS | % m/m |
|---|---|
| Deltaméthrine® | 3,27 |
| Phénylsulfonate de calcium | 1,07 |
| Emulsogen EL 360® | 1,61 |
| Solvesso 200® | 32,40 |
| Wessalon S® | 20,65 |
| Sipon LOS 98® | 3,00 |
| Geropon T 36® | 7,00 |
| Argirec B 24® | 31,00 |

### EXEMPLE 2 :

| INGREDIENTS | % m/m |
|---|---|
| Deltaméthrine® | 5,13 |
| Soprofor PA 17® | 3,48 |
| Génapol PF 10® | 0,38 |
| Surfadone LP 100® | 28,61 |
| Wessalon S® | 20,00 |
| Sipon LCS 98® | 3,00 |
| Geropon T 36® | 5,00 |
| BHT | 0,04 |
| Acide citrique | 0,004 |
| Weegum F® | 3,00 |
| Amidon de maïs | 31,36 |

### EXEMPLE 3 :

| INGREDIENTS | % m/m |
|---|---|
| Deltaméthrine® | 5,13 |
| Soprofor PA 17® | 3,48 |
| Génapol PF 10® | 0,38 |
| Surfadone LP 100® | 28,61 |
| Wessalon S® | 20,00 |
| Sipon LCS 98® | 3,00 |
| Geropon T 36® | 5,00 |
| BHT | 0,04 |
| Acide citrique | 0,004 |
| Sulfate de sodium | 3,00 |
| Amidon de maïs | 29,36 |
| Borresperce NA® | 2,00 |

### EXEMPLE 4 :

| INGREDIENTS | % m/m |
|---|---|
| Deltaméthrine® | 5,13 |
| Soprofor PA 17® | 3,48 |
| Génapol PF 10® | 0,38 |
| Surfadone LP 100® | 28,61 |
| Wessalon S® | 25,64 |
| Sipon LCS 98® | 5,00 |
| Geropon T 36® | 10,00 |
| BHT | 0,04 |
| Acide citrique | 0,004 |
| Sulfate de sodium | 10,90 |
| Sucre | 10,00 |

### EXEMPLE 5 :

| INGREDIENTS | % m/m |
|---|---|
| Deltaméthrine® | 5,13 |
| Soprofor PA 17® | 3,48 |
| Génapol PF 10® | 0,38 |
| Surfadone LP 100® | 28,61 |
| Wessalon S® | 25,64 |
| Sellogen DFL® | 5,00 |
| Reax 88 A® | 3,00 |
| BHT | 0,04 |
| Acide citrique | 0,004 |
| Dextrine blonde de maïs | 10,00 |
| Argirec B 24® | 17,90 |

### EXEMPLE 6 :

| INGREDIENTS | % m/m |
|---|---|
| Deltaméthrine® | 5,13 |
| Soprofor PA 17® | 3,48 |
| Génapol PF 10® | 0,38 |
| Surfadone LP 100® | 28,61 |
| Wessalon S® | 25,64 |
| Morwet D 425® | 5,00 |
| Sipon LCS 98® | 3,00 |
| BHT | 0,04 |
| Acide citrique | 0,004 |
| Bentone EW® | 5,00 |
| Argirec B 24® | 22,90 |

### EXEMPLE 7 :

| INGREDIENTS | % m/m |
|---|---|
| Deltaméthrine® | 3,1 |
| Pirimicarb® | 47,1 |
| BHT | 0,02 |
| Acide citrique | 0,002 |
| Rhodafac PA 17® | 2,09 |
| Agsolex 8® | 17,89 |
| Wessalon S® | 15,00 |
| Dispersant SI | 10,00 |
| Amidon de maïs | 4,8 |

- Phénylsulfonate de calcium = dodécylbenzènesulfonate de calcium : émulsifiant
- Emulsogen EL 360® = huile de ricin éthoxylée : émulsifiant
- Solvesso 200® = alkylnaphtalènes : solvant
- Wessalon S® = silice : charge
- Sipon LOS 98® = laurylsulfate de Na : mouillant
- Gérapon T 36® = polycarboxylate : dispersant - liant
- Argirec B 24® = argile kaolinique : charge
- Soprofor PA 17® (Rhodafac PA 17®) = alkylaryl phosphate éther éthoxylé : émulsifiant
- Genapol PF 10® = Bloc copolymère OE/OP : émulsifiant
- Surfadone LP 100® = N-alkylpyrrolydone : solvant
- BHT = butylhydroxytoluène : stabilisant
- Weegum F® = silicate d'Al et Mg : charge-liant
- Borresperce Na® = lignosulfonate de Na : dispersant
- Sellogen DFL® = alkylnaphtalène sulfonate de Na : mouillant
- Reax 88 A® = lignosulfonate de Na : dispersant
- Morwet D 425® = alkylnaphtalène sulfonate de Na : dispersant
- Bentone EW® = silicate de Mg : charge-liant
- Agsolex 8® = N-alkyl pyrrolidone
- Dispersant SI = mélange de N-alkyl naphtalène de sodium et de lauryl sulfate de sodium.

### B - Etude de stabilité

On a étudié le comportement au stockage des granulés de l'invention.

Ces granulés sont conservés pendant 4 semaines à 50°C et pendant 6 semaines en respectant un cycle selon lequel la température est maintenue à -6°C pendant 6 heures, augmentée jusqu'à +46°C en 6 heures, et maintenue à -6°C pendant 6 heures et ainsi de suite pendant 6 semaines. Ces granulés conservent leurs propriétés initiales. En effet les caractéristiques suivantes n'ont pas changé de façon significative : aspect, dispersabilité, teneur en deltaméthrine, dilution.

Les granulés ont une très bonne stabilité.

### Etude biologique des granulés de l'invention

1 - Les granulés décrits ci-dessus sont mélangés à de l'eau à raison de 0,5 à 0,75 kg de granulés pour des volumes variant de 150 à 500 litres d'eau, de préférence variant entre 250 et 300 litres d'eau. On obtient ainsi des bouillies diluées qu'on pulvérise à raison de 250-300 l/ha sur différentes cultures infestées (céréales, colza, pois, betteraves, cultures légumières). Une excellente activité insecticide est obtenue sur ces différentes cultures.
2 - Activité sur pucerons
La méthodologie utilisée est la suivante.
On utilise des femelles aptères du premier et second stade larvaire de Rhopalosiphum padi, et des plants de blé stade 2F (variété Florence-Aurore), cultivés dans des pots (8 plants par pot).
2 jours avant traitement, chaque pot est infesté avec 16 pucerons adultes.
1 jour et 6 jours après traitement (1J AT, 6J AT) on dénombre les pucerons.
Les résultats obtenus sont les suivants :

| | 1 J AT | | 6 J AT | |
|---|---|---|---|---|
| | Pucerons adult/pot | % Efficacité | Pucerons /pot | % Efficacité |
| TEMOIN | 13,5 ± 0,9 | - | 72,6 ± 21,5 | - |

| Concentration 4,1 % | | | | |
|---|---|---|---|---|
| 6,25 g m.a./ha | 1,25 ± 1,2 | 91 | 13,7 ± 4,9 | 81 |
| 3,125 g m.a./ha | 2,6 ± 0,8 | 80 | 16,5 ± 6,5 | 77 |
| m.a. = matière active. | | | | |

## Revendications

1. Procédé de préparation de granulés renfermant un principe actif dont le point de fusion est supérieur à 70°C choisi parmi les pyréthrinoïdes caractérisé on ce que l'on dissout ledit principe actif dans un solvant, aromatique ou une pyrolidone, la quantité de solvant utilisée étant comprise entre 20 et 40 % de la quantité totale des ingrédients utilisés (m/m) obtient une solution que l'on absorbe sur un support, obtient un produit que l'on additionne ou pas d'eau, sèche et met sous forme de granulés.

2. Procédé selon la revendication 1, caractérisé en ce que le support est choisi dans le groupe des produits suivants : les argiles, les bentonites, les lactoses, les amidons, les silices, les silicates, les sulfates et les chlorures de métaux alcalins et alcalino-terreux.

3. Procédé selon la revendication 1 ou 2, caractérisé on ce que l'on utilise une quantité de support inférieure à 60 % (m/m) de la quantité totale des ingrédients utilisés.

4. Procédé selon l'une quelconque des revendications 1 à 3, caractérisé on ce que le pyréthrinoïde est la deltaméthrine.

5. Procédé selon l'une quelconque des revendications 1 à 4, caractérisé en ce que la quantité de principe actif est inférieure à 20 %.

6. Procédé selon l'une quelconque des revendications 1 à 5, caractérisé on ce que le solvant renferme un ou plusieurs des ingrédients suivants : émulsifiants et stabilisants.

7. Procédé selon l'une quelconque des revendications 1 à 6, caractérisé en ce que l'on utilise en outre un ou plusieurs des éléments suivants : dispersants, mouillants, liants, colorants, anti-mousses.

8. Procédé selon la revendication 7, caractérisé en ce que l'on utilise :
jusqu'à 50 % de principe actif
20 à 40 % de solvant m/m
0 à 5 % d'émulsifiant m/m
0 à 5 % de stabilisant m/m
0 à 15 % de dispersant m/m
0 à 10 % de mouillant m/m
0 à 5 % de liant m/m
0 à 1 % de lubrifiant m/m.

9. Granulés pouvant être obtenus selon l'une quelconque des revendications 1 à 8.

## Claims

1. Process for the preparation of granules containing an active ingredient the melting point of which is greater than 70°C chosen from the pyrethrinoids characterized in that said active ingredient is dissolved in a solvent, aromatic or a pyrolidone, the quantity of solvent used being comprised between 20 and 40% of the total quantity of ingredients used (m/m) a solution is obtained which is absorbed on a support, a product is obtained which has water added to it or not, dried and formed into granules.

2. Process according to claim 1, characterized in that the support is chosen from the group of the following products: clays, bentonites, lactoses, starches, silicas, silicates, sulphates and chlorides of alkali and alkaline-earth metals.

3. Process according to claim 1 or 2, characterized in that the quantity of support used is less than 60% (m/m) of the total quantity of ingredients used.

4. Process according to any one of claims 1 to 3, characterized in that the pyrethrinoid is deltamethrin.

5. Process according to any one of claims 1 to 4, characterized in that the quantity of active ingredient is less than 20%.

6. Process according to any one of claims 1 to 5, characterized in that the solvent contains one or more of the following ingredients: emulsifiers and stabilising agents.

7. Process according to any one of claims 1 to 6, characterized in that in addition one or more of the following elements are used: dispersing agents, wetting agents, binding agents, colouring agents, anti-foaming agents.

8. Process according to claim 7, characterized in that the following are used:
up to 50 % of active ingredient
20 to 40 % of solvent m/m
0 to 5 % of emulsifier m/m
0 to 5 % of stabilising agent m/m
0 to 15 % of dispersing agent m/m
0 to 10 % of wetting agent m/m
0 to 5 % of binding agent m/m
0 to 1 % of lubricant m/m.

9. Granules which can be obtained according to any one of claims 1 to 8.

## Patentansprüche

1. Verfahren zur Herstellung von Granulaten, die einen unter den Pyrethrinoiden ausgewählten Wirkstoff mit einem Schmelzpunkt von über 70 °C umfassen, dadurch gekennzeichnet, daß man den genannten Wirkstoff in einem aromatischen Lösungsmittel oder einem Pyrrolidon löst, wobei die Menge des verwendeten Lösungsmittels zwischen 20 % und 40 % der Gesamtmenge der eingesetzten Bestandteile (m/m) beträgt, eine Lösung erhält, die man auf einem Träger absorbiert, ein Produkt erhält, dem man Wasser oder kein Wasser zusetzt und dieses trocknet und die in Form von Granulaten bringt.

2. Verfahren nach Anspruch 1, dadurch gekennzeichnet, daß der Träger aus der Gruppe der folgenden Produkte gewählt wird: Tone, Bentonite, Lactosen, Stärken, Kieselsäuren, Silicate, Sulfate und Chloride von Alkalimetallen und Erdalkalimetallen.

3. Verfahren nach Anspruch 1 oder 2, dadurch gekennzeichnet, daß man eine Menge an Träger von unter 60 % (m/m) der Gesamtmenge der eingesetzten Bestandteile verwendet.

4. Verfahren nach einem der Ansprüche 1 bis 3, dadurch gekennzeichnet, daß das Pyrethrinoid Deltamethrin ist.

5. Verfahren nach irgendeinem der Ansprüche 1 bis 4, dadurch gekennzeichnet, daß die Menge an Wirkstoff unter 20 % liegt.

6. Verfahren nach irgendeinem der Ansprüche 1 bis 5, dadurch gekennzeichnet, daß das Lösungsmittel einen oder mehrere der folgenden Bestandteile umfaßt: Emulgatoren und Stabilisatoren.

7. Verfahren nach irgendeinem der Ansprüche 1 bis 6, dadurch gekennzeichnet, daß man außerdem eines oder mehrere der folgenden Elemente verwendet: Dispersionsmittel, Netzmittel, Bindemittel, Farbstoffe, Antischaummittel.

8. Verfahren nach Anspruch 7, dadurch gekennzeichnet, daß man verwendet:
bis zu 50 % Wirkstoff,
20 % bis 40 % Lösungsmittel m/m,
0 % bis 5 % Emulgator m/m,
0 % bis 5 % Stabilisator m/m,
0 % bis 15 % Dispersionsmittel m/m,
0 % bis 10 % Netzmittel m/m,
0 % bis 5 % Bindemittel m/m,
0 % bis 1 % Gleitmittel m/m.

9. Granulate, die nach irgendeinem der Ansprüche 1 bis 8 erhalten werden können.
